# EUROPÄISCHE PATENTSCHRIFT

(11) **EP 4 528 582 B1**
(45) Veröffentlichungstag und Bekanntmachung des Hinweises auf die Patenterteilung: **18.06.2025**
(21) Anmeldenummer: 23198418.8
(22) Anmeldetag: 20.09.2023
(51) Int. Cl.: G06K 7/10, G06K 7/14

(54) **KAMERAVORRICHTUNG UND VERFAHREN ZUM LESEN OPTISCHER CODES**
CAMERA DEVICE AND METHOD FOR READING OPTICAL CODES
APPAREIL DE CAMÉRA ET PROCÉDÉ DE LECTURE DE CODE OPTIQUE

(43) Veröffentlichungstag der Anmeldung: 26.03.2025
(73) Patentinhaber: SICK AG, 79183 Waldkirch (DE)
(72) Erfinder: Schütz, Frank, 79365 Rheinhausen (DE); Schüler, Pascal, 79331 Teningen (DE)

(56) Entgegenhaltungen:
- EP-A1- 3 109 792
- EP-A1- 3 454 298
- US-A1- 2022 284 383

## Beschreibung

Die Erfindung betrifft eine Kameravorrichtung und ein Verfahren zum Lesen optischer Codes nach dem Oberbegriff von Anspruch 1 beziehungsweise 9.

Das Lesen optischer Codes ist von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation.

In einer wichtigen Anwendungsgruppe werden die codetragenden Objekte an dem Codeleser vorbei gefördert. Eine Variante von kamerabasierten Codelesern nutzt eine Zeilenkamera, um die Objektbilder mit den Codeinformationen sukzessive und zeilenweise mit der Relativbewegung einzulesen. Auch ein scannender Codeleser erfasst die Remission und damit letztlich Bildzeilen, die zu einem Objektbild zusammengefügt werden können, auch wenn hierfür in der Praxis ein Bildsensor vorgezogen wird. Mit einem zweidimensionalen Bildsensor nimmt eine andere Variante von kamerabasierten Codelesern regelmäßig Bilddaten auf, die einander je nach Aufnahmefrequenz und Fördergeschwindigkeit mehr oder weniger überlappen.

Eine einzelne Kamera reicht oft nicht aus, um sämtliche relevanten Informationen über die Objekte auf einem Förderband aufzunehmen. Deshalb werden mehrere Kameras in einem Lesesystem oder Lesetunnel zusammengefasst. Liegen zur Erhöhung des Objektdurchsatzes mehrere Förderbänder nebeneinander, oder wird ein verbreitertes Förderband verwendet, so ergänzen sich mehrere Kameras in ihren an sich zu schmalen Sichtfeldern gegenseitig, um die gesamte Breite abzudecken. Außerdem werden Kameras in unterschiedlichen Positionen montiert, um Codes von allen Seiten aufzunehmen (Omni-Lesung).

Innerhalb eines Lesetunnels werden die einzelnen Kameras in einem Master-Slave-System zusammengefasst. Die jeweiligen Kameras nehmen Bilder von Objekten mit Codes auf, identifizieren darin mögliche Codebereiche und lesen deren Codeinhalt noch innerhalb der Kamera aus. Das Leseergebnis wird dann an den Master weitergegeben. Dort werden gleiche Leseergebnisse von gleichen Objekten, die von unterschiedlichen Kameras aufgenommen und decodiert wurden, erkannt und Redundanzen eliminiert oder als Bestätigung registriert. Die kumulierten Leseergebnisse werden dann vom Master an einen Host beispielsweise in Form einer Cloud des Betreibers der Förderanlage weitergeleitet.

Das wichtigste Qualitätskriterium eines Lesetunnels ist dessen Leserate, genaugenommen die Anforderung, möglichst sämtliche Codes korrekt zu lesen. Fehl- oder Nichtlesungen führen zu aufwändigen und meist manuellen Nachbearbeitungen. Ein häufiger Grund für einen Lesefehler ist eine unzureichende Bildqualität eines erfassten Codes. Prinzipiell sind Techniken wie Superresolution-Verfahren bekannt, um die Bildqualität aufzuwerten. Der Master hat aber keine Möglichkeit, solche Verfahren anzuwenden, da ihm nur Leseergebnisse kommuniziert werden. Die Übertragung sämtlicher Bilddaten von den Kameras an den Master würde andererseits extreme Anforderungen an Bandbreite und Rechenleistung des Masters stellen.

Die Arbeit Bailey, Donald G. "Super-resolution of bar codes", Journal of Electronic Imaging 10.1 (2001): 213-220 beschreibt, wie mehrere aus zueinander leicht verdrehten Perspektiven aufgenommene Bilder zu einem höher aufgelösten Bild kombiniert werden, um einen Barcode zu lesen. Ein Lesetunnel bietet aber gar nicht die Voraussetzung, um solche Bilder aufzunehmen.

Die DE 10 2004 017 504 A1 nimmt mit einer Kamera zeitversetzt Bilder auf und setzt Teilbilder von Codes zu einem Gesamtbild zusammen. Dabei wird gezielt die Verwendung mehrerer Kameras vermieden. Ziel der Bildverarbeitung ist nicht höhere Bildqualität, sondern die Erfassung eines gesamten Codes auch dann, wenn jedes einzelne Bild nur Fragmente davon enthält.

In der EP 2 693 364 A1 werden von mehreren Teilkameras mehrere Bilder in teilweise überlappenden Erfassungsbereichen aufgenommen und zu einem gemeinsamen Bild zusammengesetzt. In einem interessierenden Bereich mit einem Code wird ausdrücklich nur Bildinformation einer Teilkamera verwendet, damit ein Codebereich frei von Artefakten des Stitchings bleibt. Das schließt eine Aufwertung der Bildqualität aus einer Mehrfachaufnahme des interessierenden Bereichs aus.

Aus der US 9 501 683 B1 ist bekannt, einen Bildbereich mehrfach mit um einen Bruchteil eines Pixels zueinander versetzten Bildsensorzeilen aufzunehmen. Aus den versetzten Bildinformationen wird dann ein höher aufgelöstes Bild rekonstruiert. Das ist letztlich nichts anderes als eine besondere Umsetzung einer Zeilenkamera mit höherer Auflösung.

Die US 10 304 201 B2 fusioniert mehrere Bildbereiche anhand von Positionsdaten der Bildbereiche, die in einer Nachschlagtabelle gespeichert werden. Dabei geht es um ein gegenseitiges Ergänzen, nicht redundante Aufnahmen interessierender Bereiche. Eine Auflösungserhöhung wäre so nicht einmal möglich und wird auch nicht diskutiert.

In der US 2014/0270539 A1 wird eine nacheinander aufgenommene Bildserie eines Codebereichs verwendet, um ein höherwertiges Bild zu gewinnen und damit den Code zu lesen. Hier gibt es nur eine einzige Kamera.

Die US 2018/0040150 A1 rekonstruiert einen Code über die Aufnahmebereiche mehrerer Kameras hinweg. In einer Ausführungsform nehmen zwei Kameras einen Bereich überlappend auf, dies jedoch für ein Stereobild und nicht um die Bildqualität aufzuwerten.

Die EP 3 454 298 A1 offenbart eine Kameravorrichtung und ein Verfahren zur Erfassung eines Stromes aus Objekten. Es werden mehrere einander teilweise überlappende Einzelbilder aufgenommen, und daraus wird anhand von Geometriedaten eines Geometrieerfassungssensors ein zusammengesetztes Objektbild erzeugt.

In der EP 3 109 792 A1 wird ein Code unter Verwendung mehrerer Bildaufnahmen gelesen, die mit unterschiedlichen Aufnahmeparametern erfasst sind.

Die US 2022/0284383 A1 befasst sich mit einem Barcodeleser für eine Lagerverwaltung. Darin ist die Möglichkeit erwähnt, aus einer Bildsequenz mittels Superresolution die Auflösung zu verbessern.

Es ist daher Aufgabe der Erfindung, das Lesen von Codes mit einer Kameravorrichtung weiter zu verbessern.

Diese Aufgabe wird durch eine Kameravorrichtung und ein Verfahren zum Lesen optischer Codes nach Anspruch 1 beziehungsweise 9 gelöst. Die Kameravorrichtung kann je nach gewünschter Anwendung für das Lesen einfacher Barcodes beziehungsweise 1D-Codes wie 2D-Codes nach beliebigen der diversen bekannten Standards ausgebildet sein. Es sind zwei oder mehr Kameras vorgesehen, die jeweils einen Bildsensor und eine Kamerasteuerung aufweisen. Die Sicht-, Lese- oder Erfassungsbereiche der Kameras überlappen zumindest teilweise. In dem sich dadurch ergebenden Überlappungsbereich kann ein Code mehrfach von verschiedenen Kameras erfasst werden. Die Kameras sind jeweils mit einer gemeinsamen Steuerung verbunden, die vorzugsweise als Master in einem Netzwerk der Kameras beziehungsweise einem Lesetunnel fungiert. Alternativ kann eine der Kamerasteuerungen in einer Doppelfunktion als Master agieren.

Die jeweiligen Kamerasteuerungen führen eine Segmentierung der aufgenommenen Bilddaten durch, um interessierende Bereiche mit optischen Codes aufzufinden. Dabei bedeutet optische Codes in diesem Zusammenhang zunächst nur Codekandidaten, die beispielsweise an einem hohen Bildkontrast oder mit einem sonstigen an sich bekannten Segmentierungsverfahren erkannt werden, denn ob tatsächlich ein optischer Code gelesen werden kann, wird sich erst im Anschluss in der weiteren Bildverarbeitung herausstellen. Die jeweilige Kamerasteuerung überträgt die Bilddaten der interessierenden Bereiche an die gemeinsame Steuerung. Vorzugsweise werden nur Bilddaten innerhalb der interessierenden Bereiche übertragen, um die Datenmenge gering zu halten. Wenn die jeweilige Kamerasteuerung angesprochen ist, bedeutet dies, dass dies beide Kameraeinheiten oder, falls vorhanden, auch eine dritte, vierte und weitere Kameraeinheit betrifft. Dabei bleibt umgekehrt zulässig, dass es Kameras in dem Verbund gibt, die anders ausgestaltet sind und somit zu mindestens einigen Aspekten der Erfindung nicht beitragen.

Die Erfindung geht von dem Grundgedanken aus, mindestens doppelt oder sogar mehrfach von verschiedenen Kameraeinheiten aufgenommene interessierende Bereiche mit optischen Codes miteinander zu kombinieren, um höherwertige Bilddaten zu gewinnen. Mit diesen höherwertigen Bilddaten folgt dann eine Decodierung, also das Lesen des in dem interessierenden Bereich aufgenommenen optischen Codes.

Die Erfindung hat den Vorteil, dass in der gemeinsamen Steuerung die Bildqualität und damit letztlich die Leserate gesteigert werden kann. Durch Übertragung der Bilddaten aus interessierenden Bereichen wird dabei die Datenmenge klein gehalten, so dass die Anforderungen an die Bandbreite und die Rechenressourcen moderat bleiben.

Die gemeinsame Steuerung ist bevorzugt dafür ausgebildet, Bilddaten in von mehr als einer Kameraeinheit aufgenommenen interessierenden Bereichen mit einem Superresolution-Verfahren zu kombinieren. Es entsteht ein Bild vergleichbar einer Aufnahme mit höherer Bildauflösung. Damit wird die mehrfache Bildinformation eines interessierenden Bereichs besonders vorteilhaft ausgenutzt.

Die gemeinsame Steuerung ist bevorzugt dafür ausgebildet, Bilddaten in von mehr als einer Kameraeinheit aufgenommenen interessierenden Bereichen zu kombinieren, indem Bildabschnitte, die eine Kameraeinheit nicht oder in schlechter Qualität aufgenommen hat, durch Bildabschnitte einer anderen Kameraeinheit ersetzt werden. Eine einzelne Kamera nimmt nicht selten einen optischen Code unvollständig auf, beispielsweise wegen eines Reflexes insbesondere bei einem Code unter einer Folie. Das Bild einer anderen Kamera in ihrer abweichenden Perspektive wird in aller Regel solche Fehlstellen nicht ausgerechnet in demselben Bereich aufweisen. Somit ist es oft möglich, derartige Lücken gegenseitig aufzufüllen und einen aus dem einzelnen Bild nicht lesbaren Code doch noch zu decodieren. Ein weiterer Grund für Lücken in den Bildabschnitten einer Kamera kann sein, dass sich der Code nur teilweise in deren Erfassungsbereich befunden hat.

Die Kombinationsmöglichkeiten sind mit Superresolution und gegenseitiger Ergänzung von Lücken oder Fehlstellen keineswegs abschließend aufgeführt, und es ist auch denkbar, mehrere Kombinationsverfahren gemeinsam anzuwenden. Weitere Alternativen sind ein Mitteln von Bilddaten verschiedener Kameras, ein Aufaddieren von Helligkeitswerten oder der Einsatz eines Verfahrens des maschinellen Lernens, insbesondere eines neuronalen Netzes. Dieses wird beispielsweise mit mehreren Aufnahmen eines interessierenden Bereichs, die auch künstlich erzeugt sein können, und einem zugehörigen idealen Abbild des in dem interessierenden Bereich enthaltenen Codes trainiert.

Die jeweilige Kamerasteuerung ist in einer ersten erfindungsgemäßen Alternative dafür ausgebildet, die Position eines aufgefundenen interessierenden Bereichs in Weltkoordinaten zu bestimmen und die Weltkoordinaten an die gemeinsame Steuerung zu übertragen. Die jeweilige Kamera erfasst interessierende Bereiche zunächst nur bezogen auf ihren Bildsensor in Pixel- oder Kamerakoordinaten. Dabei fehlt die Vergleichbarkeit zu den Aufnahmen anderer Kameras, die durch eine Umrechnung in Weltkoordinaten geschaffen wird. Voraussetzung dafür ist eine anfängliche Kalibrierung, um ein Kameramodell sowie die Lage bezüglich der anderen Kameras beziehungsweise des Weltkoordinatensystems zu kennen (Registrierung). Mit einem jeweiligen interessierenden Bereich übergibt die Kamera auch dessen Position in den berechneten Weltkoordinaten.

Die jeweilige Kamerasteuerung überträgt in einer zweiten erfindungsgemäßen Alternative die Position eines aufgefundenen interessierenden Bereichs in Kamerakoordinaten an die gemeinsame Steuerung, und die gemeinsame Steuerung ist dafür ausgebildet, die Kamerakoordinaten in Weltkoordinaten umzurechnen. Das ist eine zentrale Alternative zu der im Vorabsatz erläuterten dezentralen Bestimmung von Positionen in Weltkoordinaten in den einzelnen Kameras. Auch hierfür ist eine anfängliche Kalibrierung beziehungsweise Registrierung erforderlich. Zudem muss die gemeinsame Steuerung die Kameramodelle der angeschlossenen Kameras kennen. Dies kann von den Kameras beispielsweise während einer Initialisierung an die gemeinsame Steuerung kommuniziert werden, oder die gemeinsame Steuerung hat entsprechende Informationen vorgespeichert, die sie anhand eines Kameratyps passend abrufen kann.

Die gemeinsame Steuerung ist bevorzugt dafür ausgebildet, anhand der Position der interessierenden Bereiche in Weltkoordinaten zu erkennen, welche interessierenden Bereiche von mehr als einer Kameraeinheit aufgenommen sind. Mit den Weltkoordinaten hat die gemeinsame Steuerung Vergleichbarkeit und ein sehr einfaches Kriterium, um die miteinander zu kombinierenden, mehrfach aufgenommenen interessierenden Bereiche zu erkennen.

Die Kameravorrichtung erfasst bevorzugt einen Strom von relativ zu der Kameravorrichtung bewegten Objekten mit optischen Codes, ist insbesondere stationär an einer Fördereinrichtung montiert, auf der Objekte mit optischen Codes gefördert werden. Dies entspricht der einleitend erläuterten häufigen Anwendungssituation. Dabei herrschen Echtzeitanforderungen, unter denen die Erfindung ihre Vorteile besonders gut ausspielen kann. Dabei sollen nämlich mit wenig Aufwand mit den vorhandenen Aufnahmen nach Möglichkeit alle Codes gelesen werden. Einfache Fehlerstrategien wie das erneute Aufnehmen von Bildern im Falle eines nicht gelesenen Codes sind nicht umsetzbar. Die Kameraeinheiten decken vorzugsweise gemeinsam die Breite des Stromes von Objekten ab.

Die jeweiligen Kamerasteuerungen sind bevorzugt dafür ausgebildet, Bilddaten gleichzeitig aufzunehmen, aus denen die gemeinsame Steuerung interessierende Bereiche kombiniert. Mit den mehreren Kameraeinheiten können die Aufnahmen parallel erzeugt werden. Gleichzeitig ist hier in einem praktisch sinnvollen Rahmen gemeint, Toleranzen sind zugelassen. In einer weitgehend statischen Szenerie, wie bei einer Präsentationsanwendung, sind dabei größere Toleranzen erlaubt als in einer hochdynamischen Szenerie. Es ist auch denkbar, bei einem Zeitversatz die zwischenzeitliche Bewegung rechnerisch zu kompensieren. Das ist mit besonders wenig Rechenaufwand bei einer gleichförmigen Bewegung wie an einem Förderband möglich, wo eine Zeitdifferenz proportional einer zwischenzeitlichen Verschiebung mit der Fördergeschwindigkeit als Proportionalitätskonstante ist.

Die Erfassungsbereiche der Kameraeinheiten überlappen vorzugsweise derart, dass jeder optische Code einer Höchstabmessung von mindestens zwei Kameraeinheiten erfasst wird. Es herrscht also vollständige Redundanz, beziehungsweise der relevante Lesebereich liegt innerhalb des Überlappungsbereichs. Bei mehr als zwei Kameraeinheiten genügt ein jeweiliger paarweiser Überlapp, womit höhere Redundanz nicht ausgeschlossen wird. Eine Höchstabmessung der optischen Codes ist genannt, weil die Überlappungsbedingung nur für begrenzte Dimensionierungen erfüllt werden kann. Codes, die größer sind als die Höchstabmessung, werden je nach Situation möglicherweise nur partiell von mehr als einer Kamera erfasst. Dann kann eine Kombination immer noch nützlich sein, um Teilerfassungen zu einem Gesamtbild des Codes zu kombinieren.

Die erste Kamerasteuerung und/oder die zweite Kamerasteuerung ist bevorzugt dafür ausgebildet, einen Code in einem interessierenden Bereich zu lesen und das Decodierergebnis an die gemeinsame Steuerung zu übertragen. Die einzelnen Kameras sind also in dieser Ausführungsform selbst in der Lage, Codes zu lesen, und sind somit kamerabasierte Codeleser. Damit werden typischerweise schon sehr hohe Leseraten erreicht, so dass für die Kombination in der gemeinsamen Steuerung nur noch die wenigen Problemfälle übrigbleiben, auf die dort die vorhandenen Ressourcen gebündelt werden können. Vorzugsweise werden zu interessierenden Bereichen, deren Codes eine Kamera schon selbst lesen konnte, die Bilddaten nicht mehr an die gemeinsame Steuerung übertragen. Lediglich die vergleichsweise wenigen Daten des Leseergebnisses beanspruchen dann Übertragungsbandbreite. Denkbar ist, dass auch lediglich partielle Leseergebnisse übertragen werden und die gemeinsame Steuerung versucht, auf dieser Ebene mit einem partiellen Leseergebnis einer anderen Kamera ein gültiges Leseergebnis zu erzielen. In einer alternativen Ausführungsform decodieren die Kamerasteuerungen nicht selbst, sondern die gesamte Decodierung bleibt der gemeinsamen Steuerung vorbehalten, auch für nur einfach aufgenommene und/oder problemlos lesbare Codes. Weiter denkbar ist eine Aufgabenteilung, in der einige interessierende Bereiche in den Kameras und einige in der gemeinsamen Steuerung ausgewertet werden. Beispielsweise schickt eine Kamera dann außer den interessierenden Bereichen, in denen sie keinen Code lesen konnte, auch einige interessierende Bereiche an die gemeinsame Steuerung, für die sie derzeit einfach keine Rechenkapazitäten hat, ohne überhaupt oder abschließend ausprobiert zu haben, ob der Code auch schon ohne Kombination mit interessierenden Bereichen einer anderen Kamera lesbar gewesen wäre.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Draufsicht auf eine Kameravorrichtung an einem Förderband mit zu erfassenden Objekten;
- Fig. 2: eine sehr vereinfachte Blockdarstellung einer Kameravorrichtung;
- Fig. 3: ein beispielhaftes Ablaufdiagramm der Bildaufnahme und Bildverarbeitung beziehungsweise Bildvorverarbeitung in den einzelnen Kameras; und
- Fig. 4: eine Illustration des Ablaufs des Codelesens in der Kameravorrichtung.

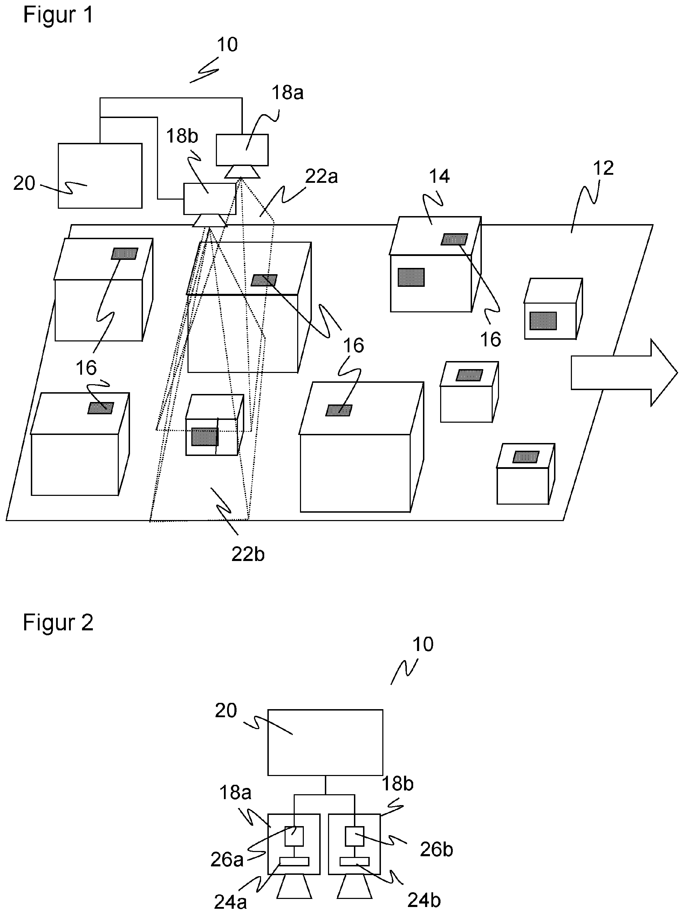

Figur 1 zeigt eine schematische dreidimensionale Draufsicht auf eine Kameravorrichtung 10 an einem Förderband 12 mit zu erfassenden Objekten 14, auf denen Codes 16 angebracht sind. Das Förderband 12 ist ein Beispiel für die Erzeugung eines Stromes von Objekten 14, die sich relativ zu der stationären Kameravorrichtung 10 bewegen. Alternativ kann die Kameravorrichtung 10 im Zusammenhang mit unbeweglichen Objekten eingesetzt werden, beispielsweise in einer sogenannten Präsentationsanwendung, in der Objekte gezielt in den Lesebereich der Kameravorrichtung 10 gehalten werden.

Die Kameravorrichtung 10 umfasst mindestens zwei Kameras 18a-b und eine gemeinsame Steuerung 20, an die beide Kameras 18a-b angeschlossen sind. Die Erfassungsbereiche 22a-b der Kameras 18a-b überlappen miteinander, vorzugsweise wie gezeigt in Querrichtung des Förderbandes 12. Der dargestellte Grad der Überlappung soll rein beispielhaft verstanden werden und kann in anderen Ausführungsformen auch deutlich abweichen. Allerdings kann der noch zu erläuternde erfindungsgemäße Vorteil einer durch Kombination von Aufnahmen mehrerer Kameras 18a-b verbesserten Leserate nur in einem Überlappungsbereich erzielt werden. Deshalb ist eine große oder sogar vollständige Überlappung bevorzugt. Sind mehr als zwei Kameras 18a-b eingesetzt, so ergeben sich verschiedene Überlappungen verschiedenen Grades, wobei paarweise Überlappungen für ein verbessertes Codelesen durch Kombination von Aufnahmen ausreichen und es dadurch viele mögliche Konfigurationen gibt, einen großen Gesamtbereich redundant mit mehreren Kameras zu erfassen.

Figur 2 zeigt den Aufbau der Kameravorrichtung 10 nochmals in einer sehr vereinfachten Blockdarstellung. Die Kameras 18a-b weisen neben nicht weiter erläuterten Elementen wie einem Objektiv, einem möglichen Gehäuse und dergleichen jeweils einen Bildsensor 24a-b mit einer Vielzahl von zu einer Pixelzeile oder einer Pixelmatrix angeordneten Lichtempfangselementen sowie eine Kamerasteuerung 26a-b auf. Die jeweilige Kamerasteuerung 26a-b umfasst mindestens einen digitalen Rechenbaustein, wie mindestens einen Mikroprozessor, mindestens ein FPGA (Field Programmable Gate Array), mindestens einen DSP (Digital Signal Processor), mindestens ein ASIC (Application-Specific Integrated Circuit), mindestens eine VPU (Video Processing Unit) oder mindestens einen Neural Processor. Insbesondere in Codeleseanwendungen wird häufig eine Vorverarbeitung auf einen eigenen digitalen Rechenbaustein ausgelagert, für Vorverarbeitungsschritte wie eine Entzerrung, eine Helligkeitsanpassung, eine Binarisierung, eine Segmentierung, das Auffinden von interessierenden Bereichen (ROI, Region of Interest), speziell Codebereichen und dergleichen. Weitere Bildverarbeitung nach dieser Vorverarbeitung erfolgt dann vorzugsweise in mindestens einem Mikroprozessor.

Die Steuerung 20 fungiert vorzugsweise als Master für die Kommunikation innerhalb der Kameravorrichtung 10. Dabei kann es sich um eine dedizierte übergeordnete Steuerung im eigentlichen Sinne, eine sonstige angeschlossene Recheneinheit, den Teil eines weiteren Netzwerks, ein Edge-Device oder eine Cloud handeln. Alternativ können die Aufgaben der Steuerung 20 von einer Kamerasteuerung 26a-b übernommen werden, die damit eine Doppelfunktion erhält.

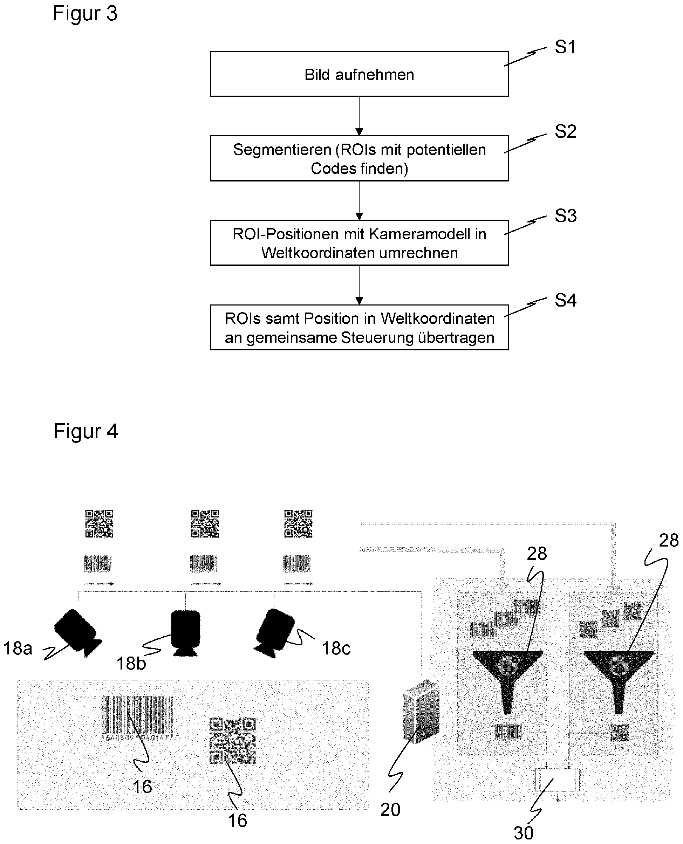

Figur 3 zeigt ein beispielhaftes Ablaufdiagramm der Bildaufnahme und Bildverarbeitung beziehungsweise Bildvorverarbeitung in den einzelnen Kameras 18a-b. In einem Schritt S1 nimmt die Kamera 18a-b ein Bild auf. Das Bild wird in einem Schritt S2 segmentiert, also auf mögliche Codes durchsucht. Entsprechende Segmentierungsverfahren, die beispielsweise Bereiche mit den für optische Codes typischen hohen Schwarz-Weiß-Kontrasten suchen, sind an sich bekannt, so dass dieser Schritt nicht näher beschrieben wird. Es findet dabei noch keine Decodierung statt. Das Ergebnis ist beispielsweise eine Liste interessierender Bereiche noch in Form von Pixelpositionen, d.h. bezogen auf das Bild.

In einem Schritt S3 werden die Pixelpositionen anhand eines Kameramodells in Weltkoordinaten umgerechnet. Die Kameras 18a-b sind dafür kalibriert beziehungsweise zueinander registriert, so dass die erforderlichen Transformationen bekannt sind. In einem Schritt S4 werden die Bildausschnitte der gefundenen interessierenden Bereiche mit möglichen Codes samt der Position in Weltkoordinaten an die gemeinsame Steuerung 20 übertragen.

Prinzipiell ist denkbar, dass die Umrechnung von Pixelpositionen in Weltkoordinaten erst in der gemeinsamen Steuerung 20 erfolgt. Dazu muss dann zu einem interessierenden Bereich eine Information über die sendende Kamera 18a-b übertragen werden und die gemeinsame Steuerung 20 die erforderlichen Transformationen kennen, beispielsweise durch Übertragung der Transformation oder entsprechender Kalibrierungsdaten zur Berechnung der Transformation im Rahmen einer Initialisierung. In einer weiteren Ausführungsform versucht die Kamera 18a-b doch in einem zusätzlichen, nicht gezeigten Schritt zwischen den Schritten S2 und S3 den jeweiligen Code selbst zu lesen. Wenn das gelingt, werden statt des interessierenden Bereichs wie herkömmlich die Leseergebnisse übertragen. Die Schritte S3 und S4 folgen nur, wenn der Kamera 18a-b selbst keine Decodierung gelingt oder sie erkennt, dass die Bildqualität für eine erfolgreiche Decodierung nicht ausreicht. Die gemeinsame Steuerung 20 ist in dieser weiteren Ausführungsform also nur für die problematischen Fälle zuständig. In einer weiteren Alternative folgt die jeweilige Kamera 18a-b zunächst dem Ablauf der Figur 3 und nutzt ein etwaig bis zur nächsten Bildaufnahme verbleibendes Zeitfenster für eigene Decodierversuche. In diesem Fall kann es vorteilhaft sein, dass Kamera 18a-b und gemeinsame Steuerung 20 sich jeweils informieren, wenn ein Code gelesen wurde, oder dass eine Abfolge der Bearbeitung der interessierenden Bereiche festgelegt ist oder gemeinsam vereinbart wird, so dass Kamera 18a-b und gemeinsame Steuerung 20 nach Möglichkeit an verschiedenen Codes arbeiten.

Figur 4 zeigt eine Illustration des Ablaufs des Codelesens in der Kameravorrichtung 10. Auf der linken Seite ist nochmals der zu Figur 3 beschriebene Ablauf in verkürzter Form illustriert. Es sind nun beispielhaft drei Kameras 18a-c statt bisher zwei Kameras 18a-b, die Bilder aufnehmen, darin interessierende Bereiche mit Codes 16 auffinden und diese samt der Position in Weltkoordinaten an die gemeinsame Steuerung 20 übergeben. Es wurde bereits erläutert, dass eine Redundanz der Erfassungsbereiche erforderlich ist, damit die gemeinsame Steuerung 20 die Bildqualität der interessierenden Bereiche erhöhen kann. In dem gezeigten Beispiel können sogar alle drei Kameras 18a-c die beispielhaft gezeigten Codes 16 erfassen.

Wie auf der rechten Seite der Figur 4 illustriert, empfängt die gemeinsame Steuerung 20 die Bildausschnitte der von den jeweiligen Kameras 18a-c übertragenen interessierenden Bereiche mit den Codes 16 samt deren Position in Weltkoordinaten. Anhand der Weltkoordinaten kann die gemeinsame Steuerung 20 feststellen, welche interessierenden Bereiche demselben Code 16 entsprechen. Dazu müssen die in den Weltkoordinaten über die Kameras 18a-c hinweg vergleichbaren Positionen innerhalb gewisser Toleranzen übereinstimmen, wobei die Toleranzen sich von Bruchteilen der Abmessungen der zu lesenden Codes beziehungsweise des jeweiligen interessierenden Bereichs ableiten können. Im gezeigten Beispiel zeigt der Vergleich in Weltkoordinaten, dass sowohl der Barcode als auch der 2D-Code jeweils dreimal aufgenommen wurde, und die entsprechenden interessierenden Bereiche können einander zugeordnet werden.

In einer schematisch dargestellten Fusion 28 werden die redundant übertragenen interessierenden Bereiche miteinander kombiniert, um eine erhöhte Bildqualität zu erzielen. Dabei können verschiedene Codes wie gezeigt parallel oder alternativ nacheinander bearbeitet werden. Es sind verschiedene Fusionsalgorithmen möglich, die auch miteinander kombiniert werden können. Ein Beispiel ist ein Superresolution-Verfahren. Die Mehrfachaufnahme des interessierenden Bereichs stammt von verschiedenen Kameras 18a-c, was zu Unterschieden in den Sichtbereichen der Pixel führt, die wiederum für eine Auflösungserhöhung genutzt werden können. Solche Verfahren sind an sich bekannt und werden daher nicht näher erläutert. Ein weiteres Beispiel ist eine Art gegenseitiges Lückenfüllen. Besonders beim Lesen von Codes unter Folie treten häufig Reflexbereiche auf, in denen der Code kaum noch oder gar nicht mehr sichtbar ist. Solche Reflexbereiche sind aber in den unterschiedlichen Perspektiven zueinander verschoben. Deshalb kann die Bildinformation aus einer Kamera 18a-c durch diejenige einer anderen Kamera 18a-c kompensiert werden. Dabei kann die jeweilige reflexfreie oder reflexärmere Bildinformation allein eingefügt oder entsprechend übergewichtet, entsprechend die durch Reflexe gestörte Bildinformation herausgeschnitten oder untergewichtet werden. Ein weiterer Grund für eine lückenhafte Erfassung eines Codes in einer Kamera 18a-c kann darin liegen, dass der Code sich nur teilweise in deren Erfassungsbereich 22a-c befunden hat. Gemeinsam aus allen Perspektiven der Kameras 18a-c ergibt sich dann trotzdem in vielen Fällen noch ein Gesamtbild des Codes. Weitere Beispiele einer Fusion sind Mittelungs-, Quantils- oder Additionsverfahren.

Der derart aufbereitete Bildausschnitt wird dann einem Decoder 30 der gemeinsamen Steuerung 20 zugeführt, die den darin enthaltenen Code liest. Das gelingt wegen der höheren Bildqualität mit einer verbesserten Leserate. Die Leseergebnisse werden dann an ein übergeordnetes System übertragen, beispielsweise ein Netzwerk oder eine Cloud des Betreibers des Förderbandes 12. Sofern die Kameras 18a-c selbst Decodierversuche unternommen haben, werden deren Leseergebnisse gesammelt und ebenfalls weitergegeben. Mehrfachlesungen werden in der gemeinsamen Steuerung 20 abgefangen, oder diese Auswertung wird dem übergeordneten System überlassen. Es ist denkbar, neben den reinen Leseergebnissen weitere Informationen auszugeben, wie Bilddaten insbesondere zu den interessierenden Bereichen, Positionen in Weltkoordinaten für eine Zuordnung zu dem den Code 16 tragenden Objekt 14 und dergleichen.

Wie Figur 4 illustriert, können 1D-Codes und 2D-Codes verarbeitet werden. Bei 1D-Codes oder Barcodes können Teildecodierungen zusammengesetzt werden. Dabei sollte aber noch geprüft werden, ob es sich um den gleichen Codetyp handelt und ob es gemeinsame Zeichen gibt, die sich als Übergangsbereich zwischen zwei Teildecodierungen eignen. Bei 2D-Codes genügen die Positionen in Weltkoordinaten möglicherweise in ihrer Genauigkeit noch nicht als Eingangsdaten eines Fusionsalgorithmus'. Dann kann zur Verbesserung der Lagegenauigkeit eine Registrierung der Bilder des 2D-Codes erfolgen. Es sei abschließend nochmals betont, dass die gemeinsame Steuerung 20 Bildabschnitte oder interessierende Bereiche fusioniert, die aus Aufnahmen verschiedener Kameras 18a-c vorzugsweise zu einem gleichen Zeitpunkt stammen. Die Fusion ist daher sofort möglich, nicht wie im Falle der Auswertung einer Sequenz einer einzelnen Kamera 18a-c erst mit größerer Verzögerung.

## Patentansprüche

1. Kameravorrichtung (10) zum Lesen optischer Codes (16), die mindestens eine erste Kameraeinheit (18a) mit einer ersten Kamerasteuerung (26a) und einem ersten Bildsensor (24a) zur Aufnahme von Bilddaten aus einem ersten Erfassungsbereich (22a) und eine zweite Kameraeinheit (18b) mit einer zweiten Kamerasteuerung (26b) und einem zweiten Bildsensor (24b) zur Aufnahme von Bilddaten aus einem zweiten Erfassungsbereich (22b), der wenigstens teilweise mit dem ersten Erfassungsbereich (22a) überlappt, sowie eine gemeinsame Steuereinheit (20) aufweist, wobei die jeweilige Kamerasteuerung (26a-b) dafür ausgebildet ist, in den Bilddaten interessierende Bereiche mit optischen Codes (16) aufzufinden und die Bilddaten der interessierenden Bereiche an die gemeinsame Steuerung (20) zu übertragen,
**dadurch gekennzeichnet,**
**dass** die gemeinsame Steuerung (20) dafür ausgebildet ist, die Bilddaten in von mehr als einer Kameraeinheit (18a-b) aufgenommenen interessierenden Bereichen zu kombinieren und daraus einen optischen Code (16) in dem interessierenden Bereich zu lesen,
wobei die jeweilige Kamerasteuerung (26a-b) dafür ausgebildet ist, die Position eines aufgefundenen interessierenden Bereichs in Weltkoordinaten zu bestimmen und die Weltkoordinaten an die gemeinsame Steuerung (20) zu übertragen oder die jeweilige Kamerasteuerung (26a-b) die Position eines aufgefundenen interessierenden Bereichs in Kamerakoordinaten an die gemeinsame Steuerung (20) überträgt und die gemeinsame Steuerung (20) dafür ausgebildet ist, die Kamerakoordinaten in Weltkoordinaten umzurechnen.

2. Kameravorrichtung (10) nach Anspruch 1,
wobei die gemeinsame Steuerung (20) dafür ausgebildet ist, Bilddaten in von mehr als einer Kameraeinheit (18a-b) aufgenommenen interessierenden Bereichen mit einem Superresolution-Verfahren zu kombinieren.

3. Kameravorrichtung (10) nach Anspruch 1 oder 2,
wobei die gemeinsame Steuerung (20) dafür ausgebildet ist, Bilddaten in von mehr als einer Kameraeinheit (18a-b) aufgenommenen interessierenden Bereichen zu kombinieren, indem Bildabschnitte, die eine Kameraeinheit (18a-b) nicht oder in schlechter Qualität aufgenommen hat, durch Bildabschnitte einer anderen Kameraeinheit (18a-b) ersetzt werden.

4. Kameravorrichtung (10) nach einem der vorhergehenden Ansprüche,
wobei die gemeinsame Steuerung (20) dafür ausgebildet ist, anhand der Position der interessierenden Bereiche in Weltkoordinaten zu erkennen, welche interessierenden Bereiche von mehr als einer Kameraeinheit (18a-b) aufgenommen sind.

5. Kameravorrichtung (10) nach einem der vorhergehenden Ansprüche,
wobei die Kameravorrichtung (18a-b) einen Strom von relativ zu der Kameravorrichtung (10) bewegten Objekten (14) mit optischen Codes (16) erfasst, insbesondere stationär an einer Fördereinrichtung (12) montiert ist, auf der Objekte (14) mit optischen Codes (16) gefördert werden.

6. Kameravorrichtung (10) nach einem der vorhergehenden Ansprüche,
wobei die jeweiligen Kamerasteuerungen (26a-b) dafür ausgebildet sind, Bilddaten gleichzeitig aufzunehmen, aus denen die gemeinsame Steuerung (20) interessierende Bereiche kombiniert.

7. Kameravorrichtung (10) nach einem der vorhergehenden Ansprüche,
wobei die Erfassungsbereiche (22a-b) der Kameraeinheiten (18a-b) derart überlappen, dass jeder optische Code (16) einer Höchstabmessung von mindestens zwei Kameraeinheiten (18a-b) erfasst wird.

8. Kameravorrichtung (10) nach einem der vorhergehenden Ansprüche,
wobei die erste Kamerasteuerung (26a) und/oder die zweite Kamerasteuerung (26b) dafür ausgebildet ist, einen Code (16) in einem interessierenden Bereich zu lesen und das Decodierergebnis an die gemeinsame Steuerung (20) zu übertragen.

9. Verfahren zum Lesen optischer Codes (16) mit mindestens einer ersten Kameraeinheit (18a), die Bilddaten aus einem ersten Erfassungsbereich (22a) erfasst, und einer zweiten Kameraeinheit (18b), die Bilddaten aus einem zweiten Erfassungsbereich (22b) erfasst, wobei die erste Kameraeinheit (18a) eine erste Kamerasteuerung (26a) und die zweite Kameraeinheit (18b) eine zweite Kamerasteuerung (26b) aufweist, wobei die Kameraeinheiten (18a-b) jeweils in den Bilddaten interessierende Bereiche mit optischen Codes (16) auffinden und die Bilddaten der interessierenden Bereiche an eine gemeinsame Steuerung (20) übertragen,
**dadurch gekennzeichnet,**
**dass** die gemeinsame Steuerung (20) die Bilddaten in von mehr als einer Kameraeinheit (18a-b) aufgenommenen interessierenden Bereichen kombiniert und daraus einen optischen Code (16) in dem interessierenden Bereich liest, wobei die jeweilige Kamerasteuerung (26a-b) die Position eines aufgefundenen interessierenden Bereichs in Weltkoordinaten bestimmt und die Weltkoordinaten an die gemeinsame Steuerung (20) überträgt
oder die jeweilige Kamerasteuerung (26a-b) die Position eines aufgefundenen interessierenden Bereichs in Kamerakoordinaten an die gemeinsame Steuerung (20) überträgt und die gemeinsame Steuerung (20) die Kamerakoordinaten in Weltkoordinaten umrechnet.

## Claims

1. Camera device (10) for reading optical codes (16), comprising at least a first camera unit (18a) with a first camera control (26a) and a first image sensor (24a) for capturing image data from a first detection area (22a), and a second camera unit (18b) with a second camera control (26b) and a second image sensor (24b) for capturing image data from a second detection area (22b), which at least partially overlaps with the first detection area (22a), and a common control unit (20), wherein the respective camera control (26a-b) is configured to detect regions of interest with optical codes (16) in the image data and to transmit the image data of the regions of interest to the common control unit (20),
**characterized in that**
the common control unit (20) is configured to combine the image data in regions of interest captured by more than one camera unit (18a-b) and to read an optical code (16) in the region of interest therefrom,
wherein the respective camera control (26ab) is configured to determine the position of a detected region of interest in world coordinates and to transmit the world coordinates to the common control unit (20),
or the respective camera control (26a-b) transmits the position of a detected region of interest in camera coordinates to the common control unit (20), and the common control unit (20) is configured to convert the camera coordinates into world coordinates.

2. Camera device (10) according to claim 1, wherein the common control unit (20) is configured to combine image data in regions of interest captured by more than one camera unit (18a-b) using a superresolution method.

3. Camera device (10) according to claim 1 or 2, wherein the common control unit (20) is configured to combine image data in regions of interest captured by more than one camera unit (18a-b) by replacing image sections not captured or captured in poor quality by one camera unit (18a-b) with image sections of another camera unit (18a-b).

4. Camera device (10) according to any of the preceding claims, wherein the common control unit (20) is configured to recognize, based on the position of the regions of interest in world coordinates, which regions of interest are captured by more than one camera unit (18a-b).

5. Camera device (10) according to any of the preceding claims, wherein the camera device (18a-b) detects a stream of objects (14) with optical codes (16) moving relative to the camera device (10), in particular is mounted stationary on a conveying device (12) on which objects (14) with optical codes (16) are conveyed.

6. Camera device (10) according to any of the preceding claims, wherein the respective camera controls (26a-b) are configured to simultaneously capture image data from which the common control unit (20) combines regions of interest.

7. Camera device (10) according to any of the preceding claims, wherein the detection areas (22a-b) of the camera units (18a-b) overlap in such a way that each optical code (16) of a maximum size is captured by at least two camera units (18a-b).

8. Camera device (10) according to any of the preceding claims, wherein the first camera control (26a) and/or the second camera control (26b) is configured to read a code (16) in a region of interest and to transmit the decoding result to the common control unit (20).

9. Method for reading optical codes (16) with at least a first camera unit (18a), which captures image data from a first detection area (22a), and a second camera unit (18b), which captures image data from a second detection area (22b), wherein the first camera unit (18a) has a first camera control (26a) and the second camera unit (18b) has a second camera control (26b), wherein the camera units (18a-b) each detect regions of interest with optical codes (16) in the image data and transmit the image data of the regions of interest to a common control unit (20),
**characterized in that**
the common control unit (20) combines the image data in regions of interest captured by more than one camera unit (18ab) and reads an optical code (16) in the region of interest therefrom,
wherein the respective camera control (26a-b) determines the position of a detected region of interest in world coordinates and transmits the world coordinates to the common control unit (20),
or the respective camera control (26a-b) transmits the position of a detected region of interest in camera coordinates to the common control unit (20), and the common control unit (20) converts the camera coordinates into world coordinates.

## Revendications

1. Dispositif de caméra (10) pour la lecture de codes optiques (16), comprenant au moins une première unité de caméra (18a) avec un premier contrôle de caméra (26a) et un premier capteur d'image (24a) pour la capture de données d'image provenant d'une première zone de détection (22a), et une deuxième unité de caméra (18b) avec un deuxième contrôle de caméra (26b) et un deuxième capteur d'image (24b) pour la capture de données d'image provenant d'une deuxième zone de détection (22b), qui chevauche au moins partiellement la première zone de détection (22a), ainsi qu'une unité de commande commune (20), dans lequel le contrôle de caméra respectif (26ab) est configuré pour détecter, dans les données d'image, des zones d'intérêt contenant des codes optiques (16) et pour transmettre les données d'image des zones d'intérêt à l'unité de commande commune (20),
**caractérisé en ce que**
l'unité de commande commune (20) est configurée pour combiner les données d'image dans des zones d'intérêt capturées par plus d'une unité de caméra (18ab) et pour lire un code optique (16) dans la zone d'intérêt à partir de celles-ci,
dans lequel le contrôle de caméra respectif (26ab) est configuré pour déterminer la position d'une zone d'intérêt détectée en coordonnées mondiales et transmettre les coordonnées mondiales à l'unité de commande commune (20),
ou le contrôle de caméra respectif (26ab) transmet la position d'une zone d'intérêt détectée en coordonnées de caméra à l'unité de commande commune (20), et l'unité de commande commune (20) est configurée pour convertir les coordonnées de caméra en coordonnées mondiales.

2. Dispositif de caméra (10) selon la revendication 1,
dans lequel l'unité de commande commune (20) est configurée pour combiner les données d'image dans des zones d'intérêt capturées par plus d'une unité de caméra (18ab) au moyen d'un procédé de super-résolution.

3. Dispositif de caméra (10) selon la revendication 1 ou 2,
dans lequel l'unité de commande commune (20) est configurée pour combiner les données d'image dans des zones d'intérêt capturées par plus d'une unité de caméra (18ab) en remplaçant les sections d'image qu'une unité de caméra (18a b) n'a pas prises ou a prises en mauvaise qualité par des sections d'image d'une autre unité de caméra (18a b).

4. Dispositif de caméra (10) selon l'une des revendications précédentes,
dans lequel l'unité de commande commune (20) est configurée pour reconnaître, sur la base de la position des zones d'intérêt en coordonnées mondiales, quelles zones d'intérêt sont capturées par plus d'une unité de caméra (18ab).

5. Dispositif de caméra (10) selon l'une des revendications précédentes,
dans lequel le dispositif de caméra (18ab) détecte un flux d'objets (14) se déplaçant par rapport au dispositif de caméra (10) avec des codes optiques (16), en particulier est monté de manière stationnaire sur un dispositif de transport (12) sur lequel des objets (14) avec des codes optiques (16) sont transportés.

6. Dispositif de caméra (10) selon l'une des revendications précédentes,
dans lequel les contrôles de caméra respectifs (26ab) sont configurés pour capturer simultanément des données d'image à partir desquelles l'unité de commande commune (20) combine des zones d'intérêt.

7. Dispositif de caméra (10) selon l'une des revendications précédentes,
dans lequel les zones de détection (22ab) des unités de caméra (18ab) se chevauchent de telle sorte que chaque code optique (16) de dimensions maximales est détecté par au moins deux unités de caméra (18ab).

8. Dispositif de caméra (10) selon l'une des revendications précédentes,
dans lequel le premier contrôle de caméra (26a) et/ou le deuxième contrôle de caméra (26b) est configuré pour lire un code (16) dans une zone d'intérêt et transmettre le résultat du décodage à l'unité de commande commune (20).

9. Procédé pour la lecture de codes optiques (16) avec au moins une première unité de caméra (18a), qui détecte des données d'image d'une première zone de détection (22a), et une deuxième unité de caméra (18b), qui détecte des données d'image d'une deuxième zone de détection (22b), dans lequel la première unité de caméra (18a) comprend un premier contrôle de caméra (26a) et la deuxième unité de caméra (18b) un deuxième contrôle de caméra (26b), dans lequel les unités de caméra (18ab) détectent chacune dans les données d'image, des zones d'intérêt contenant des codes optiques (16) et transmettent les données d'image des zones d'intérêt à une unité de commande commune (20),
**caractérisé en ce que**
l'unité de commande commune (20) combine les données d'image dans des zones d'intérêt capturées par plus d'une unité de caméra (18ab) et lit un code optique (16) dans la zone d'intérêt à partir de celles-ci,
dans lequel le contrôle de caméra respectif (26ab) détermine la position d'une zone d'intérêt détectée en coordonnées mondiales et transmet les coordonnées mondiales à l'unité de commande commune (20),
ou le contrôle de caméra respectif (26ab) transmet la position d'une zone d'intérêt détectée en coordonnées de caméra à l'unité de commande commune (20), et l'unité de commande commune (20) convertit les coordonnées de caméra en coordonnées mondiales.
